Europäisches Patentamt

European Patent Office

Office européen des brevets

(19)

(11) **EP 0 768 531 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int Cl.$^6$: **G01P 5/00**

(21) Anmeldenummer: **96104279.3**

(22) Anmeldetag: **18.03.1996**

(54) **Verfahren und Anordnung zur Messung physikalischer Grössen von lichtstreuenden bewegten Teilchen mittels eines Laser-Doppler-Anemometers**

Method and device for the measurement of physical quantities of light scattering mobile particles using a laser doppler anemometer

Procédé et dispositif pour la mesure de grandeurs physiques de particules mobiles diffusant la lumière en utilisant un anémomètre laserdoppler

(84) Benannte Vertragsstaaten:
**AT BE CH DE DK FR GB IT LI NL**

(30) Priorität: **10.10.1995 DE 19537647**

(43) Veröffentlichungstag der Anmeldung:
**16.04.1997 Patentblatt 1997/16**

(73) Patentinhaber: **JENOPTIK Aktiengesellschaft 07739 Jena (DE)**

(72) Erfinder:
• **Dammann, Ehrhard**
**07743 Jena (DE)**
• **Bauer, Jürgen**
**07745 Jena (DE)**

(74) Vertreter: **Geyer, Werner, Dr.-Ing. et al Patentanwälte**
**Geyer, Fehners & Partner**
**Perhamerstrasse 31**
**80687 München (DE)**

(56) Entgegenhaltungen:
**EP-A- 0 636 858        DE-A- 2 453 832**

• **PATENT ABSTRACTS OF JAPAN Bd. 017, Nr. 258 (P-1540) 20 Mai 1993 & JP-A-05 002 075 (SONY CORP) 08 Januar 1993**
• **ELECTRONICS LETTERS, Bd. 23, Nr. 3, 29.Januar 1987, STEVENAGE GB, Seiten 114-116, XP002023976 J.E.SCHROEDER: "Dual Sinusodial Modulation Scheme for Directional Laser Doppler Velocimeter"**
• **LASER UND OPTOELEKTRONIK, Bd. 17, Nr. 4, Dezember 1985, STUTTGART DE, Seiten 362-375, XP002023977 B.RUCK: "Laser-Doppler-Anemometrie"**
• **OPTICS AND LASER TECHNOLOGY, Bd. 18, Nr. 5, 5.Oktober 1986, Seiten 243-252, XP002023978**
• **APPLIED OPTICS, Bd. 13, Nr. 11, November 1974, NEW YORK US, Seiten 2562-2579, XP002023979 F.DURST ET AL.: "Removal of Pedestals and Directional Ambiguity of Optical Anemometer Signals"**

## Beschreibung

Die Erfindung betrifft ein Verfahren zur Messung physikalischer Größen von lichtstreuenden bewegten Teilchen mittels Laser-Doppler-Anemometrie sowie ein entsprechendes Laser-Doppler-Anemometer (LDA) mit Phasenmodulation. Sie ist insbesondere für Geschwindigkeitsmessung von flüssigen und gasförmigen strömenden Medien geeignet, aber ebenfalls für Längen- und Beschleunigungsmessungen von festen Oberflächen einsetzbar.

LDA sind bekannte, vielseitig einsetzbare Meßgeräte, die sich beim Einsatz verschiedener Empfangsoptiken und Signalauswerteverfahren nach bekannten Verfahren der Phasen-Doppler-Anemometrie (PDA) auch zur Bestimmung von Größe und/oder Brechungsindex streuender Teilchen einsetzen lassen. Bei einem LDA wird die optische Strahlung einer kohärenten Lichtquelle in zwei räumlich getrennte Teilstrahlen geteilt, die mittels einer Sammeloptik in einem Meßpunkt abgebildet werden. Hier entsteht an streuenden Teilchen des bewegten Mediums ein auswertbares Hell-Dunkel-Streifenmuster. Während die direkten Laserstrahlen in eine Lichtfalle geführt werden, erfaßt ein auf der optischen Achse der Sammeloptik angeordneter Empfänger ein Interferenzstreifenmuster, wenn sich im Meßpunkt Streuobjekte befinden. Durchquert ein streuendes Teilchen das Interferenzstreifenmuster, nimmt der Empfänger im gestreuten Licht eine zeitliche Intensitätsmodulation wahr, aus dessen Frequenz unter Verwendung der Lichtwellenlänge und des halben Winkels zwischen den Teilstrahlen die gesuchte Geschwindigkeit errechnet wird.

Um die Richtung der Bewegung zu erkennen, ist es üblich eine Phasenverschiebung in einem Teilstrahl des LDA zu erzeugen. Dazu haben sich in letzter Zeit zunehmend elektrooptische Phasenmodulatoren durchgesetzt, da sich diese zusammen mit der Strahlteilung auf integriert-optischen Chips (IOC) kompakt installieren lassen.

Die Phasenverschiebung erfolgt regelmäßig unter Verwendung einer sägezahnförmigen Ansteuerspannung, wobei die notwendige Phasenverschiebung von ca. 10 Perioden Elektrodenlängen von etwa 20 mm und Ansteuerspannungen von ungefähr 40 V erforderlich macht. Obwohl diese Werte mit einem integriertoptischen Phasenmodulator auf APE : LiNbO$_3$ durchaus noch realisierbar sind, hat diese Lösung noch einen weiteren entscheidenden Nachteil. Infolge des endlichen Rücksprungs der Modulatorspannung vom Maximalwert des Sägezahns auf Null wird durch den erneuten Anstieg der Sägezahnansteuerspannung im allgemeinen kein phasengleiches neues Auswertesignal erzeugt. Zu diesem Zweck sind stets zwingend eine Regelung dieses Rücksprungs und ein zusätzliches "Nullsignal" zur Regelung der exakten Phasenlage des neuen Ansteuersignals erforderlich, die einen nicht unerheblichen elektronischen Aufwand bedeuten.

Der Erfindung liegt deshalb die Aufgabe zugrunde, eine neue Möglichkeit zur Erzeugung eines bewegten intensitätsmodulierten Überlagerungssignals im Meßvolumen eines LDA zu finden, die auf einer unkomplizierten Ansteuerung des Phasenmodulators basiert.

Erfindungsgemäß wird die Aufgabe bei einem Verfahren zur Messung physikalischer Größen von lichtstreuenden bewegten Teilchen mittels eines Laser-Doppler-Anemometers (LDA), bei dem das Licht aus mindestens einem Paar kohärenter Teilstrahlen, nachdem wenigstens einer der Teilstrahlen einen Phasenmodulator durchlaufen hat, in einem Meßpunkt eines Meßvolumens überlagert wird und bei Anwesenheit von streuenden Teilchen im Meßvolumen mindestens Anteile der Teilstrahlen als Streulicht auf wenigstens einen Empfänger gelangen und in elektrische Ausgangssignale gewandelt werden, die auf die Größe der Dopplerverschiebung analysiert werden, dadurch gelöst, daß der Phasenmodulator durch zwei sinusförmige Ansteuersignale mit unterschiedlichen Frequenzen und Amplituden angesteuert wird, die phasen- und frequenzstarr gekoppelt sind, wobei eine Frequenz ein ganzzahliges Vielfaches der anderen Frequenz ist, daß aus dem Ausgangssignal des Empfängers mittels eines Bandpaßfilters eine Filterfrequenz ausgefiltert wird, die ein gemeinsames Vielfaches der beiden Frequenzen beinhaltet und eine Bandbreite aufweist, die die maximal zu erwartende Dopplerverschiebung mit erfaßt, und daß die Ansteuersignale bezüglich der Größe über Amplituden so eingestellt werden, daß im ausgefilterten Signal eines der zwei entstehenden Seitenbänder weitgehend unterdrückt und das andere zur Auswertung der Dopplerverschiebung verwendet wird.

Vorteilhaft werden die Ansteuersignale des Phasenmodulators von ein und demselben Sinusgenerator abgeleitet.

Die Strahlteilung zur Erzeugung kohärenter Teilstrahlen und die Phasenmodulation werden vorzugsweise auf einem einheitlichen integriert-optischen Chip (IOC) vorgenommen. Dabei kann eine Strahlteilung zur Erzeugung von weiteren Teilstrahlenpaaren (beispielsweise zur Beleuchtung mehrerer Meßpunkte) mittels optischer Verzweiger im Multiplexbetrieb erfolgen, wobei die Ausgangssignale der den unterschiedlichen Meßpunkten zugeordnetem Empfänger synchron zur Ansteuerung auf die gemeinsame Auswerteeinheit umgeschaltet werden. Das Ausgangssignal des oder der Empfänger wird zweckmäßig nach seiner Filterung mittels eines elektronischen Mischers in einen niedrigeren Frequenzbereich transformiert.

Die Frequenzdifferenz zwischen dem ausgewählten, vorzugsweise kleinsten gemeinsamen Vielfachen der Modulationsfrequenzen und der ausgefilterten Empfangsfrequenz wird vorteilhaft mittels eines Zählers ermittelt. Aus dem Zählwert und dem Streifenabstand des Streulichtmusters auf dem Empfänger läßt sich dann die Geschwindigkeit der Teilchen berechnen.

Es erweist sich bei bewegten Teilchen im Meßvolumen als zweckmäßig, durch die Verknüpfung des orthogonalen Systems der Modulationsfrequenzen mit der ausgefilterten Empfangsfrequenz mittels einer Logikschaltung Vorwärts- und Rückwärtsimpulse zu erzeugen, indem das Empfangssignal das orthogonale System abtastet und aus dem aktuellen Abtastwert und dem vorherigen Abtastwert die Bewegungsrichtung eindeutig bestimmt wird. Aus den so erzeugten Vor- oder Rückwärtsimpulsen ist durch Zuordnung des Streifenabstands der zurückgelegte Weg der streuenden Teilchen ermittelbar, indem die Differenz aus Vor- und Rückwärtsimpulszahl mit dem mittleren Streifenabstand multipliziert wird.

Weiterhin kann das ausgefilterte Empfangssignal zweckmäßig verarbeitet werden, indem nach einer Analog-Digital-Wandlung aus einer bestimmten Anzahl von Abtastpunkten die spektrale Verteilung des Empfangssignals mittels eines speziellen Signalprozessors ermittelt wird, wobei eine Differenzfrequenz der Grundlinie dieser Spektralverteilung zum kleinsten gemeinsamen Vielfachen der Modulationsfrequenzen der Dopplerfrequenz entspricht.

Auf der Basis des beschriebenen Verfahrens wird die eingangs genannte Aufgabe bei einem Laser-Doppler-Anemometer, das mindestens zwei kohärente Teilstrahlen, einen Phasenmodulator in wenigstens einem der Teilstrahlen, optische Mittel zur Strahlführung, zur Fokussierung jeweils zweier Teilstrahlen auf bewegte Teilchen in einem Meßvolumen und zur Abbildung mindestens eines Anteils der Teilstrahlen als Streulicht von den bewegten Teilchen sowie einem Empfänger zur Aufnahme des aus einem Teilstrahlenpaar gebildeten Streulichts enthält, dadurch gelöst, daß am Phasenmodulator zwei sinusförmige Ansteuersignale mit unterschiedlichen Modulationsfrequenzen und Amplituden anliegen, die phasen- und frequenzstarr gekoppelt sind, wobei eine der Modulationsfrequenzen ein ganzzahliges Vielfaches der zweiten Modulationsfrequenz ist, daß dem Empfänger ein Bandpaßfilter nachgeordnet ist, dessen Filterfrequenz ein gemeinsames Vielfaches der Modulationsfrequenzen beinhaltet mit einer Bandbreite, mit der die maximal zu erwartende Dopplerfrequenzverschiebung erfaßbar ist, und daß die Ansteuersignale am Phasenmodulator bezüglich ihrer Amplituden so eingestellt sind, daß im Ausgangssignal des Empfängers eines der durch die Dopplerverschiebung entstehenden Seitenbänder weitgehend unterdrückt wird und lediglich das andere Seitenband in einer Auswerteeinheit unter Verwendung der Frequenz- und Phaseninformation der Ansteuersignale vom Phasenmodulator die Basis der Auswertung ist.

Der Phasenmodulator ist zur Ansteuerung mit den zwei Modulationsfrequenzen zweckmäßig über zwei verschiedene Signalwege mit ein und demselben Sinusgenerator verbunden, wobei in mindestens einem der Signalwege ein Frequenzteiler enthalten ist.

Die Auswerteeinheit hat unterschiedliche Bestandteile in Abhängigkeit von der erforderlichen Meßaufgabe.

Für die Ermittlung der Geschwindigkeit streuender Teilchen enthält sie vorzugsweise einen Zähler, der die Signalwechsel infolge der vorbeilaufenden Interferenzstreifen zählt.

Werden zusätzlich Vor- und Rückwärtsimpulse benötigt, enthält die Auswerteeinheit vorteilhaft eine PLL-Schaltung, die entsprechende Impulse ausgibt.

Alternativ kann vorteilhaft ein spezieller digitaler Signalprozessor enthalten sein, der nach einer Analog-Digital-Wandlung des Empfangssignals von einer bestimmten Anzahl von Abtastpunkten dessen spektrale Verteilung über eine schnelle Fouriertransformation ermittelt und die Differenzfrequenz der Grundlinie dieser spektralen Verteilung zum kleinsten gemeinsamen Vielfachen der Modulationsfrequenzen als Dopplerfrequenz ausgibt. Dabei steht die Zeitbasis des digitalen Signalprozessors in festem Verhältnis zu den Modulationsfrequenzen des Phasenmodulators.

Um für das LDA einen kompletten Aufbau zu erreichen, werden vorteilhaft sowohl die Strahlaufteilung des Lichts der Laserquelle als auch die Phasenmodulation auf einem gemeinsamen IOC in Form eines Y-Verzweigers und eines elektrooptischen Phasenmodulators realisiert. Zur Realisierung mehrerer Meßpunkte im Meßvolumen erweist es sich als vorteilhaft, das Licht einer Laserdiode in mindestens zwei Paare von Teilstrahlen aufzuteilen, wobei in jedem Paar von Teilstrahlen, das einem Meßpunkt zugeordnet ist, ein Teilstrahl einen Phasenmodulator aufweist. Zur Erzeugung gleichberechtigter Teilstrahlenpaare für weitere Meßpunkte ist es zweckmäßig, auf den IOC einen zusätzlichen frequenzgesteuerten Strahlteiler zu integrieren und einen zur Strahlteilungsfrequenz synchron betriebenen Multiplexer zwischen den jeweiligen, den Meßpunkten zugeordneten Empfängern und dem Bandpaßfilter in der Auswerteeinheit vorzusehen. Auf dem IOC parallel angeordnete Phasenmodulatoren bringen dazu den Vorteil mit sich, daß benachbarte Phasenmodulatoren jeweils eine gemeinsame Elektrode aufweisen.

Die Erfindung basiert auf der Überlegung, daß es zur Verringerung der Leistungsdichte der Laserstrahlung bei LDA mit elektrooptischem Phasenmodulator möglich sein muß, Überlagerungssignale, ähnlich wie bei der Heterodyninterferometrie, zur Bestimmung der Doppelfrequenz auszuwerten. Dazu wird erfindungsgemäß der Phasenmodulator mit zwei frequenz- und phasenstarr gekoppelten Frequenzen angesteuert und mit einem Bandpaßfilter ein Bereich der Erwartungsgröße der Dopplerfrequenz um das kleinste gemeinsame Vielfache der Modulationsfrequenzen des Phasenmodulators herum ausgefiltert. Aus einem Frequenzspektrum $E(f_0, 2f_0, 3f_0, \ldots nf_0, [n+1] f_0, \ldots)$ des Empfängersignals wird damit praktisch ein Frequenzbereich $< f = m f_0 \pm \Delta v$ ausgefiltert, wobei $m$ das kleinste gemeinsame Vielfache der zwei den Phasenmodulator anregenden Modulationsfrequenzen ist. Über eine Phasenverschiebung zwischen den Modulationsfrequenzen werden deren Amplituden so eingestellt, daß eines der entstehenden Seitenbänder $E_m^-$ (m $f_0$ - $\Delta v$) bzw. $E_m^+$ (m $f_0$ + $\Delta v$) sehr stark unterdrückt wird. Durch Vergleich des übrigen Seitenbandes mit dem kleinsten gemeinsamen Vielfachen der Modulationsfrequenzen ergibt sich die Dopplerfrequenz $\Delta v$, aus der sich die Geschwindigkeit der bewegten Teilchen ermitteln läßt.

Mit dem erfindungsgemäßen Verfahren zur Messung physikalischer Größen von lichtstreuenden bewegten Teilchen mittels eines entsprechend gestalteten LDA ist es möglich, ein bewegtes intensitätsmoduliertes Überlagerungssignal im Meßvolumen des LDA zu erzeugen, bei der die Grundsätze der Heterodyninterferometrie ausgenutzt und eine unkomplizierte zweifache Sinusansteuerung des Phasenmodulators eingesetzt wird. Dadurch sind niedrige Laserleistungen (< 1 mW) einsetzbar sowie kleine Ansteuerspannungen des Phasenmodulators. Daraus erwächst der Zusatzvorteil, daß das LDA in seinen Bestandteilen Strahlteilung und Phasenmodulation auf einem kompakten integriert-optischen Chip (IOC) realisierbar ist.

Die Erfindung soll nachstehend anhand von Ausführungsbeispielen näher erläutert werden. Die Zeichnungen zeigen:

Fig. 1: den Prinzipaufbau eines erfindungsgemäßen LDA,

Fig. 2: ein Ausführungsbeispiel eines IOC zur Realisierung eines elektrooptischen Phasenmodulators mit Zweifrequenzansteuerung,

Fig. 3: eine vorteilhafte Ausführungsvariante des erfindungsgemäßen LDA für zwei Meßpunkte sowie

Fig. 4: den zu Fig. 3 angepaßten Aufbau eines IOC.

Das erfindungsgemäße Verfahren zur Messung physikalischer Größen von lichtstreuenden Teilchen arbeitet nach dem Prinzip der Zweistrahldoppleranemometrie. Es enthält als wesentliche neue Schritte die Verwendung einer Zwei-Frequenz-Phasenmodulation mit einer phasen- und frequenzstarren Kopplung der zwei Frequenzen und der Bedingung, daß die eine Frequenz ein ganzzahliges Vielfaches der anderen ist, weiterhin eine Bandpaßfilterung des Empfängersignals auf der Frequenz des kleinsten gemeinsamen Vielfaches der Modulationsfrequenzen $\omega_1$ und $\omega_2$ in der Bandbreite der zu erwartenden maximalen Dopplerverschiebungen sowie eine Unterdrückung eines der zwei entstehenden Seitenbänder der Dopplerverschiebung zur Auswertung des zweiten Seitenbandes. Die genauere Erläuterung der Erfindung soll durch die Darstellung des Aufbaus und die Beschreibung der Funktionsweise der in den Figuren dargestellten vorteilhaften Ausführungen der LDA erfolgen.

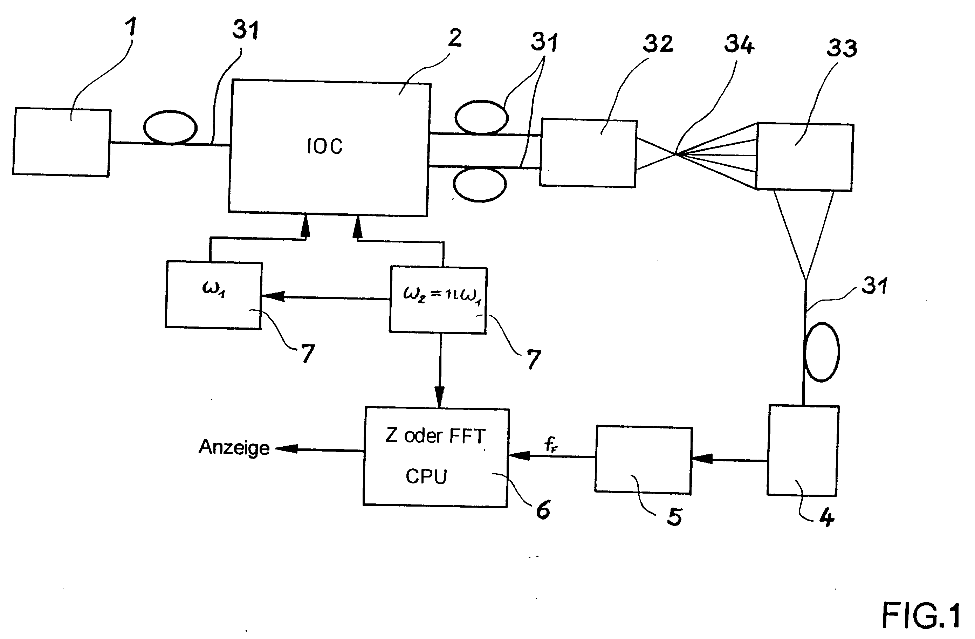

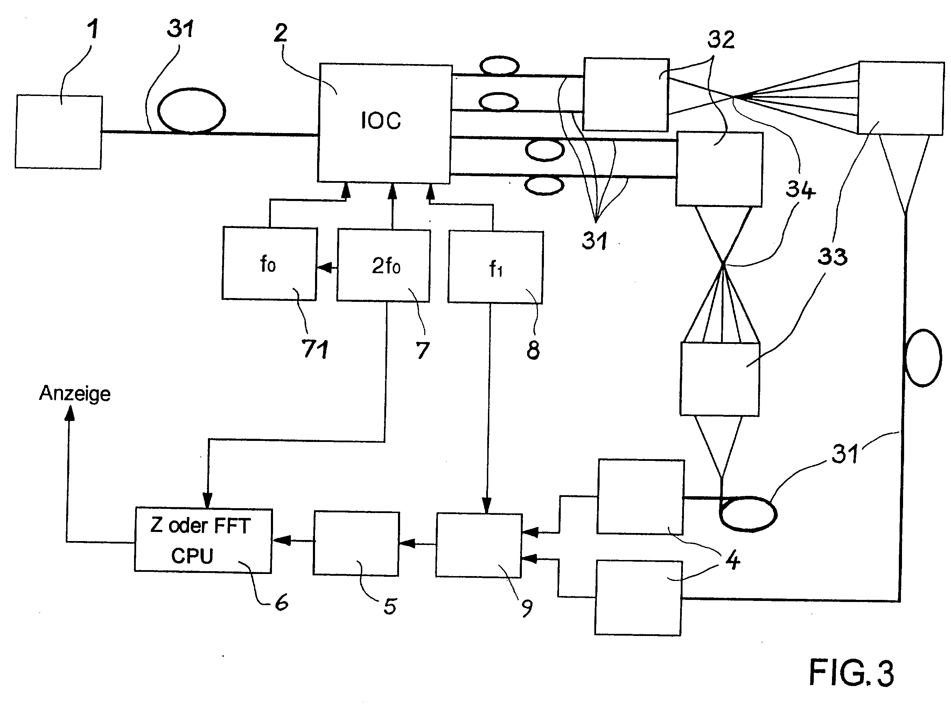

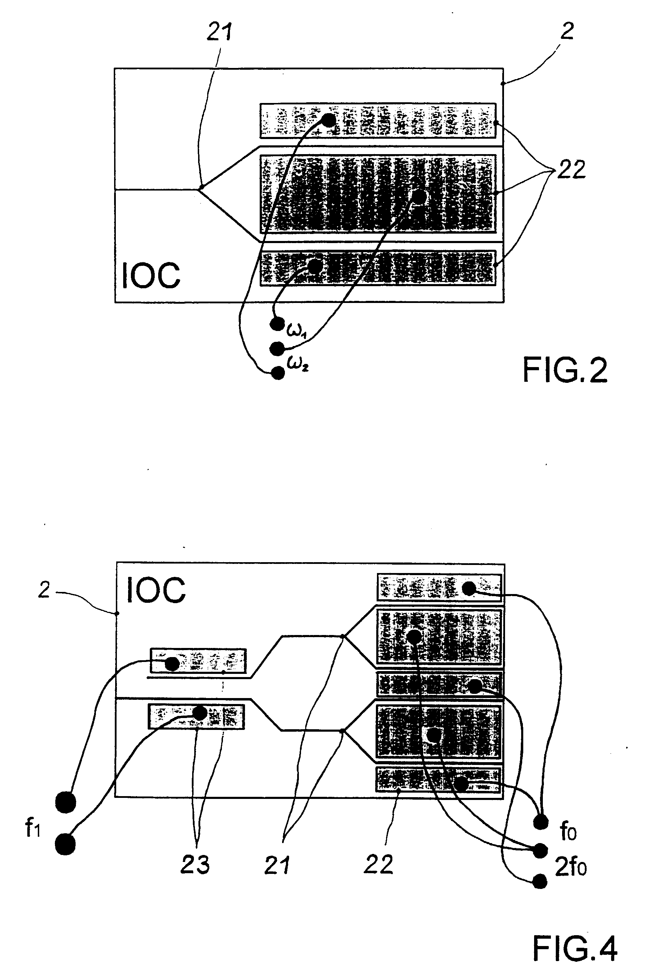

Ein erfindungsgemäßes LDA in einer Basisvariante zeigt Fig. 1. Das Licht einer Laserquelle 1, die prinzipiell beliebig, aber aus Gründen der angestrebten Kompaktheit vorzugsweise eine Laserdiode ist, wird über eine Lichtleitfaser 31 auf einen integriert-optischen Chip (IOC) 2 geleitet. Der IOC 2 enthält sowohl einen Y-Verzweiger 21 als auch einen Phasenmodulator 22 (Fig. 2). Die Gestalt und Ansteuerung des Phasenmodulators 22, wie sie Fig. 2 zeigt, stellt dabei eine vorteilhafte Anordnung eines elektrooptischen Phasenmodulators 22 bei der Zweistrahldopplermethode eines LDA dar. Aufgrund der sehr hohen Schaltfrequenz des elektrooptischen Effekts in einem vorzugsweise verwendeten IOC 2 aus $LiNbO_3$ und der niedrigen Ansteuerspannung für den Phasenmodulator 22 können die Modulationsfrequenzen $\omega_1$ und $\omega_2$ sehr hoch sein. Gewählt werden sie jedoch zweckmäßig in Abhängigkeit von der maximalen Geschwindigkeit der streuenden Teilchen im Meßpunkt 34. Die Ansteuerung des Phasenmodulators 22 erfolgt erfindungsgemäß mit zwei Modulationsfrequenzen $\omega_1$ und $\omega_2$, die phasen- und frequenzstarr gekoppelt und Harmonische ein und derselben Grundfrequenz $f_0$ sind. Dabei erweist es sich als sinnvoll, daß die eine Modulationsfrequenz $\omega_2$ ein ganzzahliges Vielfaches der anderen Modulationsfrequenz $\omega_1$ ist. Vorteilhaft werden eine Grundfrequenz $f_0$ und ihre 1. Oberwelle $2f_0$ verwendet.

Das so modulierte Laserlicht wird gemäß Fig. 1 wiederum über Lichtleitfasern 31 einer üblicherweise verwendeten Sendeoptik 32 zugeführt, die die zwei Teilstrahlen auf einen gemeinsamen Meßpunkt 34 fokussiert und zur Überlagerung bringt. Im Meßpunkt 34 befindliche streuende Teilchen geben ein laufendes Streifenmuster wieder, das mittels einer Empfangsoptik 33 in eine Lichtleitfaser 31 einkoppelt und auf einen Empfänger 4, vorzugsweise eine Avalangephotodiode, geleitet wird. Ein dem Empfänger 4 nachfolgendes Bandpaßfilter 5, das auf der Frequenz des kleinsten gemeinsamen Vielfachen der Modulationsfrequenzen $\omega_1$ und $\omega_2$ eine Bandbreite der maximalen Schwankungsbreite der Dopplerverschiebung ausfiltert, gibt ein Empfängersignal an die Auswerteeinheit 6 weiter, das die Struktur

$$E(t) = B \sin (\Delta v) t \sin n f_0 t + C \cos (\Delta v) t \cos n f_0 t$$

$$= \frac{C + B}{2} \cos [n f_0 t - (\Delta v) t] + \frac{C - B}{2} \cos [n f_0 t + (\Delta v) t]$$

aufweist, wenn mit $\omega_1 = f_0$ und $\omega_2 = n f_0$ als Modulationsfrequenzen $\omega_1$ und $\omega_2$ gearbeitet wird.

Dieses Empfangssignal besitzt, im Falle n = 2 mit der Filterfrequenz $f_F = 2f_0$ ausgefiltert, zwei Seitenbänder $E_2^+$ (t) und $E_2^-$ (t) mit den Frequenzen $f_0^+ = 2f_0 + \Delta v$ und $f_0^- = 2f_0 - \Delta v$, wobei $\Delta v$ die Dopplerverschiebung bedeutet.

Bei spezieller Wahl der Parameter B = C wird das Seitenband $E_2^+$ vollständig unterdrückt, so daß eine Einseitenbanddetektion des Dopplersignals in an sich bekannter Weise vorgenommen werden kann.

Die Unterdrückung eines der Seitenbänder ist durch die Einstellung der Phasenverschiebung am Phasenmodulator 22 erreichbar.

Zur Einstellung des geeigneten Arbeitspunktes (der formelmäßig mit D bezeichnet sein soll) können die Amplituden der Ansteuersignale einzeln so eingestellt werden, daß sie die gewünschte Phasenverschiebung bewirken. Die erzeugte Phasenverschiebung ist der Ansteuerspannung des Phasenmodulators proportional. Eine Phasenverschiebung von 180° wird beispielsweise durch eine Amplitude von $\pi$ verursacht.

Um den zum Fall n = 2 zugehörigen Arbeitspunkt $D_2$ (zur Erreichung B = C) mit $D_2$ = 0,66 einzustellen, sind die Amplituden der Ansteuersignale $A_2$ = 3,80 und $A_{22}$ = 1,35 zu verwenden, so daß das gefilterte Empfängersignal $E_2$ (t) = $2D_2$ cos [$2f_0$t - ($\Delta$v)t] zur Auswertung kommt.

Die Ausfilterung kann bei allen Frequenzen $nf_0$ vorgenommen werden. So ergibt sich für die Komponente $E_1$ (t) mit der Frequenz $f_0$ der Arbeitspunkt $D_1$ = 0,68 bei $A_{11}$ = 1,83 und $A_{12}$ = 1,38.

Eine genauere Methode ist jedoch die einmalige Einstellung des Arbeitspunktes in situ, wobei die Amplituden der Seitenbänder mittels eines Spektralanalysators beobachtet und durch Verschiebung des Arbeitspunktes mittels der Wahl der Phasenverschiebung am Phasenmodulator 22 ein Seitenband unterdrückt wird. Die Auswertung des gefilterten Empfängersignals erfolgt in der Auswerteeinheit 6 in an sich bekannter Weise, wobei sich die verschiedenen Arten der Auswertung als besonders vorteilhaft für das erfindungsgemäße LDA anbieten.

Die vorzeichenbehaftete Frequenzdifferenz zwischen dem kleinsten gemeinsamen Vielfachen der Modulationsfrequenzen $\omega_1$ und $\omega_2$ (im einfachsten Fall für $\omega_1$ = $f_0$ und $\omega_2$ = $2f_0$) und der ausgefilterten Empfangsfrequenz ( $f_F$ = $2f_0$) entspricht in jedem Fall der Dopplerfrequenz und ist unmittelbar der Geschwindigkeit der streuenden Teilchen proportional.

Im einfachsten Fall erfolgt die Erfassung der Frequenzdifferenz mittels Zählern, wie das Z in der Auswerteeinheit 6 symbolisiert. Dabei wird eine aus der aufgenommenen Filterfrequenz $f_F$ durch Mischen und Teilen gebildete Torzeit mit einer möglichst hohen Zählfrequenz ausgemessen. Die einfache mathematische Verknüpfung von Zählwert und Streifenabstand ergibt das Maß für die Geschwindigkeit. Dabei stehen Zählfrequenz des Zählers sowie das kleinste gemeinsame Vielfache der Modulationsfrequenz zweckmäßig in ganzzahligem Verhältnis. Dieser Sachverhalt wird in Fig. 1 durch die Verbindungsleitung zu einem ersten Sinusgenerator 7 symbolisiert, der das Primat bei der frequenz- und phasenstarren Kopplung der Modulationsfrequenzen $\omega_1$ und $\omega_2$ besitzt. Die Erzeugung der abhängigen Modulationsfrequenz $\omega_1$ ist gleichfalls durch eine Verbindungsleitung zu einem gemäß Fig. 1 vorteilhaft eingesetzten weiteren Sinusgenerator 7 symbolisiert.

Eine zweite Auswertemethode des LDA nutzt ein orthogonales System der Modulationsfrequenzen $\omega_1$ und $\omega_2$ (Sinus und Kosinus) und verknüpft dieses mit der ausgefilterten Empfangsfrequenz $f_F$. Das orthogonale System der Modulationsfrequenzen $\omega_1$ und $\omega_2$ wird in zwei um 90° phasenverschobene Digitalsignale überführt, wobei dieses orthogonale System durch das Empfangssignal abgetastet wird. Aus dem aktuellen Abtastwert und dem vorherigen Wert kann mittels eines PLL (Phase Locked Loop) eindeutig eine Bewegung und deren Bewegungsrichtung ermittelt werden. Eine geeignete Logikschaltung setzt diesen Sachverhalt in Vor- oder Rückwärtsimpulse um, wobei ein solcher Impuls je Interferenzstreifenabstand abgegeben wird. Die Differenz der abgegebenen Vor- oder Rückwärtsimpulszahl ergibt, multipliziert mit dem Streifenabstand, unmittelbar den zurückgelegten Weg der bewegten Teilchen. Bei dieser Auswertevariante kommt insbesondere der Vorzug eines in $LiNbO_3$ ausgeführten Phasenmodulators 22 zum Tragen, da erst die hohe Schaltfrequenz des Phasenmodulators 22 den Einsatz einer PLL ermöglicht, wenn der Betrag der relativen Dopplerverschiebung bezüglich der ausgefilterten Empfangsfrequenz $f_F$ (die zweckmäßig der größeren der beiden Modulationsfrequenzen $\omega_1$ oder $\omega_2$ entspricht) kleiner als 2 ist.

Eine dritte Auswertemethode, die kurzgefaßt in Fig. 1 mit FFT (Fast Fourier Transformation) symbolisiert wurde, benutzt das ausgefilterte Empfangssignal nach einer schnellen Analog-Digital-Wandlung als Zahlenkolonne zur Berechnung einer Spektralverteilung des Empfangssignals auf Basis einer FFT. Ein spezieller Signalprozessor berechnet aus einer bestimmten Anzahl von Abtastpunkten die spektrale Verteilung. Die Frequenzdifferenz der Grundlinie dieser Verteilung zur Modulationsfrequenz $\omega_2$ entspricht dann wieder der Dopplerverschiebung, aus der die Bewegungsdaten der streuenden Teilchen ermittelt werden können.

In Fig. 3 ist eine Ausführungsform der Erfindung dargestellt, die besonders einfach und zweckmäßig aufgebaut ist und dem Fall Rechnung trägt, daß mehrere Meßpunkte 34 im Meßvolumen erfaßt werden müssen.

Das Licht der Laserquelle 1 wird wie im Beispiel 1 mittels einer Lichtleitfaser 31 auf einen IOC 2 geführt. Dieser ist speziell auf die Bedienung zweier Meßpunkte 34 ausgelegt, ohne daß sich der nachfolgende Aufwand automatisch verdoppelt. Einen vorteilhaften Aufbau des IOC 2 zeigt Fig. 4. Die Phasenmodulatoren 22, die vorzugsweise gemeinsame Elektroden beinhalten, arbeiten mit denselben Ansteuersignalen, und das ankommende Laserlicht wird durch einen frequenzgesteuerten Verzweiger 23 alternativ auf den jeweiligen Phasenmodulator 22 umgeschaltet. Dazu dient eine zusätzliche Strahlteilungsfrequenz $f_1$, die von einem Frequenzgenerator 8 geliefert wird. Dieser Frequenzgenerator 8 steuert außerdem einen Multiplexer 9, der die Signale der (in diesem Fall zwei) Empfänger 4 auf das gemeinsame Bandpaßfilter 5 wechselweise einspeist. Damit sind lediglich für die Erzeugung und Aufnahme des Interferenzstreifenmusters in den Meßpunkten 34 separate doppelte Aufwände an Elementen notwendig. Der IOC 2 besitzt, dem frequenzgesteuerten Verzweiger 23 nachfolgend, in jedem Lichtkanal einen Y-Verzweiger 21, so daß an der Ausgangsseite des IOC 2 zwei Paare interferenzfähiger Teilstrahlen zur Verfügung stehen. Die Phasenmodulatoren 22 sind jeweils soweit miteinander verquickt, daß sich zwischen den vier aufgeteilten Lichtkanälen jeweils nur eine Elektrode befindet, die beide benachbarten Lichtkanäle bedient, so daß die Elektrodenanschlüsse spiegelsymmetrisch bezüglich der Trennlinie zwischen den Paaren von Teilstrahlen angeordnet sind. Im vorliegenden Fall ist - wie Fig. 4 zeigt - der IOC 2 symmetrisch zu seiner Mittellinie aufgebaut.

Als Ansteuersignale werden in diesem Beispiel konkret Sinussignale mit den Modulationsfrequenzen $\omega_1 = f_0$ und $\omega_2 = 2f_0$ verwendet. Dazu sind - wie Fig. 3 zeigt - ein Sinusgenerator 7, der die Grundfrequenz $2f_0$ besitzt, und ein nachfolgender Frequenzteiler 71, der die Frequenz des Sinusgenerators 7 halbiert, vorgesehen. Der Sinusgenerator 7 mit der Grundfrequenz $2f_0$ liefert außerdem die Vergleichs- und Taktfrequenz für die Auswerteeinheit 8.

Für die Auswertung gemäß der zweiten Variante aus Beispiel 1 erweist es sich als vorteilhaft, daß der Frequenzteiler 71 eine 90°-Phasenverschiebung enthält, wodurch automatisch das orthogonale System der Modulationsfrequenzen $\omega_1$ und $\omega_2$ entsteht und in vorteilhafter Weise ausgewertet werden kann. Alle übrigen Funktionsabläufe des erfindungsgemäßen LDA sind in gleicher Weise wie in Beispiel 1 vorgenommen.

Liste der verwendeten Bezugszeichen

| | |
|---|---|
| 1 | Laserquelle |
| 2 | integriert-optischer Chip/IOC |
| 21 | Y-Verzweiger |
| 22 | Phasenmodulator |
| 23 | frequenzgesteuerter Verzweiger |
| 3 | optische Mittel |
| 31 | Lichtleitfasern |
| 32 | Sendeoptik |
| 33 | Empfangsoptik |
| 34 | Meßpunkt |
| 4 | Empfänger |
| 5 | Bandpaßfilter |
| 6 | Auswerteeinheit |
| 7 | Sinusgenerator |
| 71 | Frequenzteiler |
| 8 | Frequenzgenerator |
| 9 | Multiplexer |

| | |
|---|---|
| $\omega_1$, $\omega_2$ | Modulationsfrequenzen |
| $f_0$ | Grundfrequenz |
| $f_1$ | Strahlteilungsfrequenz |
| $f_F$ | Filterfrequenz |

**Patentansprüche**

1. Verfahren zur Messung physikalischer Größen von lichtstreuenden bewegten Teilchen mittels eines Laser-Doppler-Anemometers, bei dem das Licht aus mindestens einem Paar kohärenter Teilstrahlen, nachdem wenigstens einer der Teilstrahlen einen Phasenmodulator durchlaufen hat, in einem Meßpunkt eines Meßvolumens überlagert wird und bei Anwesenheit von streuenden Teilchen im Meßvolumen mindestens Anteile der Teilstrahlen als Streulicht auf wenigstens einen Empfänger gelangen und in elektrische Ausgangssignale gewandelt werden, die auf die Größe der Dopplerverschiebung analysiert werden, dadurch gekennzeichnet, daß

- der Phasenmodulator (22) durch zwei sinusförmige Ansteuersignale mit unterschiedlichen Frequenzen ($\omega_1$, $\omega_2$) und Amplituden angesteuert wird, die phasen- und frequenzstarr gekoppelt sind, wobei eine Frequenz ($\omega_2$) ein ganzzahliges Vielfaches der anderen Frequenz ($\omega_1$) ist,
- aus dem Ausgangssignal des Empfängers (4) mittels eines Bandpaßfilters (5) eine Filterfrequenz ($f_F$) ausgefiltert wird, die ein gemeinsames Vielfaches der beiden Frequenzen ($\omega_1$, $\omega_2$) beinhaltet und eine Bandbreite aufweist, die die maximal zu erwartende Dopplerverschiebung mit erfaßt, und
- die Ansteuersignale bezüglich der Größe ihrer Amplituden so eingestellt werden, daß im ausgefilterten Signal eines der zwei entstehenden Seitenbänder weitgehend unterdrückt und das andere zur Auswertung der Dopplerverschiebung verwendet wird.

2. Verfahren nach Anspruch 1, dadurch gekennzeichnet, daß die zwei Ansteuersignale des Phasenmodulators (22) von ein und demselben Sinusgenerator (7) abgeleitet werden.

3. Verfahren nach Anspruch 1, dadurch gekennzeichnet, daß die phasenstarr gekoppelten Ansteuersignale des Phasenmodulators (22) eine definierte Phasenverschiebung zur Erkennung der Bewegungsrichtung aufweisen.

4. Verfahren nach Anspruch 1, dadurch gekennzeichnet,
daß mittels eines integriert-optischen Chips (2) sowohl eine Strahlteilung zur Erzeugung der kohärenten Teilstrahlen als auch die Phasenmodulation mit zwei Ansteuersignalen realisiert wird.

5. Verfahren nach Anspruch 4, dadurch gekennzeichnet,
daß mittels eines frequenzgesteuerten optischen Verzweigers (23) im Multiplexbetrieb sequentiell mehrere Meßpunkte (34) optisch angesteuert werden und die Ausgangssignale der Empfänger (4) aus unterschiedlichen Meßpunkten (34) synchron zur Ansteuerung des frequenzgesteuerten Verzweigers (23) auf das gemeinsame Bandpaßfilter (5) umgeschaltet werden.

6. Verfahren nach Anspruch 1, dadurch gekennzeichnet,
daß das Ausgangssignal des Empfängers (4) nach seiner Filterung mittels eines elektronischen Mischers in einen niedrigeren Frequenzbereich transformiert wird.

7. Verfahren nach Anspruch 1, dadurch gekennzeichnet,
daß die Frequenzdifferenz zwischen dem ausgewählten, insbesondere dem kleinsten gemeinsamen Vielfachen der Modulationsfrequenzen ($\omega_1$, $\omega_2$) und der ausgefilterten Empfangsfrequenz mittels eines Zählers ermittelt und aus Zählwert und Streifenabstand des Streulichtmusters am Empfänger (4) die Geschwindigkeit errechnet wird.

8. Verfahren nach Anspruch 1, dadurch gekennzeichnet,
daß durch Verknüpfung des orthogonalen Sinus-Kosinus-Systems der Modulationsfrequenzen ($\omega_1$, $\omega_2$) mit der ausgefilterten Empfangsfrequenz durch eine Logikschaltung bei bewegten Teilchen im Meßvolumen Vorwärts- oder Rückwärtsimpulse erzeugt werden, wobei das Empfangssignal das orthogonale System abtastet und aus dem aktuellen Abtastwert und dem vorherigen Abtastwert die Bewegungsrichtung eindeutig bestimmt wird.

9. Verfahren nach Anspruch 8, dadurch gekennzeichnet,
daß bei Vorliegen eines Vor- oder Rückwärtsimpulses jeweils ein Streifenabstand zugeordnet und aus der Differenz zwischen Vorwärts- und Rückwärtsimpulszahl multipliziert mit dem Streifenabstand der zurückgelegte Weg der streuenden Teilchen ermittelt wird.

10. Verfahren nach Anspruch 1, dadurch gekennzeichnet,
daß das ausgefilterte Empfangssignal nach einer Analog-Digital-Wandlung in einem speziellen Signalprozessor, der aus einer bestimmten Anzahl von Abtastpunkten die spektrale Verteilung des Empfangssignals bestimmt, verarbeitet wird, wobei die Differenzfrequenz der Grundlinie dieser spektralen Verteilung gegenüber dem kleinsten gemeinsamen Vielfachen der Modulationsfrequenzen ($\omega_1$, $\omega_2$) der Dopplerfrequenz entspricht.

11. Verfahren nach Anspruch 10, dadurch gekennzeichnet,
daß die Zeitbasis des Signalprozesses in festem Verhältnis zu den Modulationsfrequenzen ($\omega_1$, $\omega_2$) steht.

12. Laser-Doppler-Anemometer, das mindestens zwei kohärente Teilstrahlen, einen Phasenmodulator in wenigstens einem der Teilstrahlen, optische Mittel zur Strahlführung, zur Fokussierung jeweils zweier Teilstrahlen auf bewegte Teilchen in einem Meßvolumen und zur Abbildung mindestens eines. Anteils der Teilstrahlen als Streulicht von den bewegten Teilchen sowie einem Empfänger zur Aufnahme des aus einem Teilstrahlenpaar gebildeten Streulichts enthält, dadurch gekennzeichnet, daß

- am Phasenmodulator (22) zwei sinusförmige Ansteuersignale mit unterschiedlichen Modulationsfrequenzen ($\omega_1$, $\omega_2$) und Amplituden anliegen, die phasen- und frequenzstarr gekoppelt sind, wobei eine der Modulationsfrequenzen ($\omega_1$) ein ganzzahliges Vielfaches der zweiten Modulationsfrequenz ($\omega_2$) ist,
- dem Empfänger (4) ein Bandpaßfilter (5) nachgeordnet ist, dessen Filterfrequenz ($f_F$) ein gemeinsames Vielfaches der Modulationsfrequenzen ($\omega_1$, $\omega_2$) beinhaltet mit einer Bandbreite, mit der die maximal zu erwartende Dopplerfrequenzverschiebung erfaßbar ist, und
- die Ansteuersignale am Phasenmodulator (22) bezüglich ihrer Amplituden so eingestellt sind, daß im Ausgangssignal des Empfängers (4) eines der durch die Dopplerverschiebung entstehenden Seitenbänder weitgehend unterdrückt wird und lediglich das andere Seitenband in einer Auswerteeinheit (6) unter Verwendung der Frequenz- und Phaseninformation der Ansteuersignale vom Phasenmodulator (22) die Basis der Auswertung ist.

13. Anordnung nach Anspruch 12, dadurch gekennzeichnet,
daß der Phasenmodulator (22) zur Ansteuerung mit den unterschiedlichen Modulationsfrequenzen ($\omega_1$, $\omega_2$) über zwei verschiedene Signalwege mit ein und demselben Sinusgenerator (7) in Verbindung steht, wobei mindestens ein Signalweg einen Frequenzteiler (71) enthält.

**14.** Anordnung nach Anspruch 13, dadurch gekennzeichnet.
daß in einem Signalweg ein Phasenschieber angeordnet ist.

**15.** Anordnung nach Anspruch 14, dadurch gekennzeichnet,
daß die Auswerteeinheit (6) eine PLL-(phase locked loop)-Schaltung enthält, die Vor-/Rückwärtsimpulse ausgibt.

**16.** Anordnung nach Anspruch 12, dadurch gekennzeichnet,
daß in der Auswerteeinheit (6) ein Zähler vorhanden wobei die Zählung der Interferenzstreifen, verknüpft mit dem Abstand, die Geschwindigkeit ergibt.

**17.** Anordnung nach Anspruch 12, dadurch gekennzeichnet,
daß die Auswerteeinheit (6) einen speziellen digitalen Signalprozessor enthält, der auf einer FFT (Fast Fourier Transformation) basiert und die spektrale Verteilung des Empfangssignales auswertet, wobei die Differenzfrequenz der Grundlinie der spektralen Verteilung zum kleinsten gemeinsamen Vielfachen der Modulationsfrequenzen ($\omega_1$, $\omega_2$) der Dopplerfrequenz entspricht.

**18.** Anordnung nach Anspruch 12, dadurch gekennzeichnet,
daß zur Aufspaltung der Teilstrahlen aus einer Laserquelle (1) ein Y-Verzweiger (21) sowie zur Phasenmodulation ein elektrooptischer Phasenmodulator (22) auf einem integriert-optischen Chip (2) angeordnet sind.

**19.** Anordnung nach Anspruch 18, dadurch gekennzeichnet,
daß das Licht einer Laserquelle (1) in mindestens zwei Paare von Teilstrahlen aufgeteilt ist zur Realisierung mehrerer Meßpunkte (34), wobei in jedem Paar von Teilstrahlen, das einem Meßpunkt (34) zugeordnet ein Teilstrahl einen Phasenmodulator (22) aufweist.

**20.** Anordnung nach Anspruch 18, dadurch gekennzeichnet,
daß der IOC (2) einen zusätzlichen frequenzgesteuerten Verzweiger (23) zur Erzeugung gleichberechtigter Teilstrahlen für weitere Meßpunkte (34) aufweist und daß ein zur zusätzlichen Strahlteilungsfrequenz ($f_1$) synchron betriebener Multiplexer (9) zwischen den jeweiligen Empfängern (4) und dem Bandpaßfilter (5) angeordnet ist.

**21.** Anordnung nach Anspruch 19 oder 20, dadurch gekennzeichnet,

daß jeweils zwei Phasenmodulatoren (22) über eine gemeinsame Elektrode verfügen.

## Claims

**1.** Method for measuring physical parameters of light-scattering moving particles by means of a laser-Doppler anemometer, in which the light from at least one pair of coherent elementary beams, after at least one of the elementary beams has passed through a phase modulator, is superposed at a measurement point of a measurement volume and, if scattering particles are present in the measurement volume, at least parts of the elementary beams reach at least one receiver in the form of scattered light and are converted into output electric signals which are analyzed for the value of the Doppler shift, characterized in that

- the phase modulator (22) is driven by two sinusoidal drive signals with different frequencies ($\omega_1$, $\omega_2$) and amplitudes, which are rigidly coupled in terms of phase and frequency, one frequency ($\omega2$) being an integer multiple of the other frequency ($\omega_1$),
- a filter frequency ($f_F$) which contains a common multiple of the two frequencies ($\omega_1$, $\omega_2$) and has a bandwidth comprising the maximum Doppler shift to be expected, is filtered from the output signal of the receiver (4) by means of a bandpass filter (5), and
- the drive signals are adjusted in terms of the value of their amplitudes in such a way that one of the two side bands existing in the filtered signal is substantially suppressed, and the other is used to evaluate the Doppler shift.

**2.** Method according to Claim 1, characterized in that the two drive signals of the phase modulator (22) are derived from the same sinewave generator (7).

**3.** Method according to Claim 1, characterized in that the rigidly phase-coupled drive signals of the phase modulator (22) have a defined phase shift in order to recognise the direction of motion.

**4.** Method according to Claim 1, characterized in that, by means of an integrated optical chip (2), both beam splitting in order to produce the coherent elementary beams and the phase modulation with two drive signals are carried out.

**5.** Method according to Claim 4, characterized in that, by means of a frequency-controlled optical junction (23), in multiplex operation, a plurality of measurement points (34) are optically driven sequentially and the output signals of the receivers (4) from different measurement points (34) are switched to the common bandpass filter (5) synchronously in order to drive the frequency-controlled junction (23).

6. Method according to Claim 1, characterized in that the output signal of the receiver (4) is converted after its filtering by means of an electronic mixer into a lower frequency range.

7. Method according to Claim 1, characterized in that the frequency difference between the selected, in particular lowest, common multiple of the modulation frequencies ($\omega_1$, $\omega_2$) and the filtered reception frequency is determined by means of a counter, and the velocity is calculated from the count and fringe spacing of the scattered-light pattern at the receiver (4).

8. Method according to Claim 1, characterized in that by correlating the orthogonal sine-cosine system of the modulation frequencies ($\omega_1$, $\omega_2$) with the filtered reception frequency using a logic circuit, forward and backward pulses are produced in the case of moving particles in the measurement volume, the reception signal scanning the orthogonal system and definitively determining the direction of motion from the current sampled value and the previous sampled value.

9. Method according to Claim 8, characterized in that, when there is a forward or backward pulse, a fringe spacing is in each case assigned and the distance travelled by the scattering particles is determined from the difference between the forward and backward pulse number multiplied by the fringe spacing.

10. Method according to Claim 1, characterized in that the filtered reception signal is processed using analog-digital conversion in a special signal processor which determines the spectral distribution of the reception signal from a specified number of sampling points, the frequency difference of the baseline of this spectral distribution from the lowest common multiple of the modulation frequencies ($\omega_1$, $\omega_2$) corresponding to the Doppler frequency.

11. Method according to Claim 10, characterized in that the timebase of the signal process is in fixed relation with the modulation frequencies ($\omega_1$, $\omega_2$).

12. Laser-Doppler anemometer, which contains at least two coherent elementary beams, a phase modulator in at least one of the elementary beams, optical means for guiding the beams, for in each case focusing two elementary beams on moving particles in a measurement volume and for projecting at least part of the elementary beams as scattered light from the moving particles, as well as a receiver for recording the scattered light formed by an elementary beam pair, characterized in that

- two sinusoidal drive signals with different modulation frequencies ($\omega_1$, $\omega_2$) and amplitudes, which are rigidly coupled in terms of phase and frequency, are applied to the phase modulator (2), one of the modulation frequencies ($\omega_1$) being an integer multiple of the second modulation frequency ($\omega_2$),
- a bandpass filter (5), whose filter frequency ($f_F$) contains a common multiple of modulation frequencies ($\omega_1$, $\omega_2$) and with a bandwidth with which the maximum expected Doppler frequency shift can be detected, is arranged downstream of the receiver (4), and
- the drive signals at the phase modulator (22) are adjusted in terms of their amplitudes in such a way that, in the output signal of the receiver (4), one of the side bands due to the Doppler shift is substantially suppressed and only the other side band is the basis of the evaluation in an evaluation unit (6) using the information pertaining to frequency and phase of the drive signals from the phase modulator (22).

13. Arrangement according to Claim 12, characterized in that, in order to be driven with the different modulation frequencies ($\omega_1$, $\omega_2$), the phase modulator (22) is in connection via two signal paths with the same sinewave generator (7), at least one signal path containing a frequency splitter (71).

14. Arrangement according to Claim 13, characterized in that a phase-shifter is arranged in one signal path.

15. Arrangement according to Claim 14, characterized in that the evaluation unit (6) contains a PLL (phase locked loop) circuit which outputs forward/backward pulses.

16. Arrangement according to Claim 12, characterized in that there is a counter in the evaluation unit (6), the number of interference fringes, coupled with the spacing, giving the velocity.

17. Arrangement according to Claim 12, characterized in that the evaluation unit (6) contains a special digital signal processor which is based on a FFT (Fast Fourier Transform) and evaluates the spectral distribution of the reception signal, the frequency difference of the baseline of the spectral distribution from the lowest common multiple of the modulation frequencies ($\omega_1$, $\omega_2$) corresponding to the Doppler frequency.

18. Arrangement according to Claim 12, characterized in that a Y-junction (21) for division of the elementary beams from a laser source (1), and a light electrooptical phase modulator (22) for phase modulation, are arranged on an integrated optical chip (2).

19. Arrangement according to Claim 18, characterized in that the light from a laser source (1) is separated into at least two pairs of elementary beams in order to produce a plurality of measurement points (34), one elementary beam in each elementary-beam pair assigned to a measurement point (34) having a phase modulator (22).

20. Arrangement according to Claim 18, characterized in that the IOC (2) has an additional frequency-controlled junction (23) for the generation of elementary beams of equal significance for further measurement points (34), and in that a multiplexer (9) operated synchronously with the additional beam-splitting frequency ($f_1$), is arranged between the respective receivers (4) and the bandpass filter (5).

21. Arrangement according to Claim 19 or 20, characterized in that every two phase modulators (22) have a common electrode.

**Revendications**

1. Procédé servant à mesurer des grandeurs physiques de particules en mouvement dispersant de la lumière au moyen d'un anémomètre à laser et à effet Doppler, dans lequel on superpose la lumière qui provient d'au moins une paire de rayons partiels de lumière cohérente, après que l'un au moins des rayons lumineux partiels est passé à travers un modulateur de phase, en un point de mesure d'un volume de mesure et dans lequel, en présence de particules qui diffusent dans le volume de mesure, au moins des fractions des rayons lumineux partiels arrivent sous forme de lumière dispersée sur au moins un récepteur et sont converties en signaux électriques de sortie, qui sont analysés quant à la grandeur du déplacement Doppler, caractérisé en ce que

- le modulateur de phase (22) est commandé par deux signaux d'amorçage de forme sinusoïdale avec des fréquences ($\omega1$, $\omega2$) et des amplitudes différentes, qui sont couplés de manière rigide en phases et en fréquences, l'une des fréquences ($\omega2$) étant un multiple entier de l'autre fréquence ($\omega1$),
- l'on filtre à partir du signal de sortie du récepteur (4) au moyen d'un filtre passe-bande (5) une fréquence de filtrage ($f_F$), qui contient un multiple commun des deux fréquences ($\omega1$, $\omega2$) et présente une largeur de bande, qui détecte en même temps le déplacement Doppler à attendre au maximum, et
- les signaux d'amorçage sont réglés en grandeur d'amplitudes de telle façon que soit largement supprimée dans le signal filtré l'une des deux bandes latérales qui se produisent, et que l'autre soit utilisée pour l'exploitation du déplacement Doppler.

2. Procédé selon la revendication 1, caractérisé en ce que les deux signaux d'amorçage du modulateur de phase (22) sont prélevés à partir d'un seul et même générateur d'ondes sinusoïdales (7).

3. Procédé selon la revendication 1, caractérisé en ce que les signaux d'amorçage du modulateur de phase (22), qui sont couplés de façon rigide quant à leurs phases, présentent un déplacement de phase défini servant à identifier le sens du déplacement.

4. Procédé selon la revendication 1, caractérisé en ce que l'on réalise au moyen d'une puce (2) optique intégrée aussi bien un fractionnement des rayons servant à produire les rayons partiels de lumière cohérente comme aussi la modulation de phases avec deux signaux d'amorçage.

5. Procédé selon la revendication 4, caractérisé en ce qu'au moyen d'une ramification optique (23), commandée en fréquence, on amorce optiquement plusieurs points de mesure (34) de façon séquentielle en fonctionnement multiplex et on convertit les signaux de sortie du récepteur (4) provenant de différents points de mesure (34) de façon synchrone pour brancher la ramification (23), commandée en fréquence, sur le filtre passe-bande commun (5).

6. Procédé selon la revendication 1, caractérisé en ce que le signal de sortie du récepteur (4) est transformé après son filtrage au moyen d'un mélangeur électronique dans une zone de fréquence plus basse.

7. Procédé selon la revendication 1, caractérisé en ce que la différence de fréquence entre le multiple sélectionné, en particulier le plus petit commun multiple des fréquences de modulation ($\omega1$, $\omega2$) et de la fréquence filtrée de réception est déterminée au moyen d'un compteur et en ce qu'on calcule la vitesse à partir de la valeur du compteur et l'interfrange du modèle de lumière dispersée sur le récepteur (4).

8. Procédé selon la revendication 1, caractérisé en ce qu'en combinant le système orthogonal sinus - cosinus des fréquences de modulation ($\omega1$, $\omega2$) avec la fréquence de réception filtrée par un circuit logique, on produit dans le cas de particules en mouvement dans le volume de mesure des impulsions en avant ou en arrière, le signal de réception analysant le système orthogonal et le sens du déplacement étant déterminé de façon univoque à partir de la valeur actuelle d'analyse et de la valeur précédente d'analyse.

9. Procédé selon la revendication 8, caractérisé en ce que, quand il y a une impulsion en avant ou en arrière, on associe respectivement une interfrange et on détermine à partir de la différence entre le nombre des impulsions en avant et des impulsions en arrière, multiplié par l'interfrange, le chemin parcouru par les particules qui se dispersent.

10. Procédé selon la revendication 1, caractérisé en ce que le signal de réception filtré est retraité après une conversion analogique - numérique dans un processeur spécial de signaux, qui détermine à partir d'un nombre déterminé de points d'analyse la répartition spectrale du signal de réception, la fréquence différentielle de la ligne de base de cette répartition spectrale par rapport au plus petit commun multiple des fréquences de modulation ($\omega$1, $\omega$2) correspondant à la fréquence Doppler.

11. Procédé selon la revendication 10, caractérisé en ce que la base de temps du processus analogique est dans un rapport fixe avec les fréquences de modulation ($\omega$1, $\omega$2).

12. Anémomètre à laser à effet Doppler, qui contient au moins deux rayons partiels de lumière cohérente, un modulateur de phase dans au moins l'un des rayons partiels, des moyens optiques pour guider les rayons, pour focaliser respectivement deux rayons partiels sur des particules en mouvement dans un volume de mesure et pour représenter au moins une fraction des rayons partiels en tant que lumière dispersée par les particules en mouvement ainsi qu'un récepteur servant à recevoir la lumière dispersée formée par une paire de rayons partiels, caractérisé en ce que

- sur le modulateur de phase (22) sont appliqués deux signaux d'amorçage de forme sinusoïdale avec des fréquences de modulation ($\omega$1, $\omega$2) et des amplitudes différentes, qui sont couplés de manière rigide en phases et en fréquences, l'une des fréquences de modulation ($\omega$1) étant un multiple entier de l'autre fréquence ($\omega$2),

- on associe au récepteur (4) en aval un filtre passe-bande (5), dont la fréquence de filtrage ($f_F$) contient un multiple commun des fréquences de modulation ($\omega$1, $\omega$2) et présente une largeur de bande, avec laquelle on peut détecter le déplacement de fréquence Doppler à attendre au maximum, et

- les signaux d'amorçage sont réglés en amplitudes de telle façon que soit largement supprimée dans le signal de sortie du récepteur (4) l'une des bandes latérales produites par le déplacement Doppler, et qu'uniquement l'autre bande latérale serve de base à l'exploitation dans une unité d'exploitation (6) en utilisant l'information quant aux fréquences et aux phases des signaux d'amorçage du modulateur de phase (22).

13. Dispositif selon la revendication 12, caractérisé en ce que le modulateur de phase (22) qui sert à amorcer avec les fréquences de modulation différentes ($\omega$1, $\omega$2) est en liaison sur deux trajets différents de signaux avec un seul et même générateur d'ondes sinusoïdales (7), au moins l'un des trajets de signaux contenant un diviseur de fréquence (71).

14. Dispositif selon la revendication 13, caractérisé en ce que l'on dispose un décaleur de phase dans un trajet de signaux.

15. Dispositif selon la revendication 14, caractérisé en ce que l'unité d'exploitation (6) contient un circuit PLL (phase locked loop), qui délivre des impulsions en avant/en arrière.

16. Dispositif selon la revendication 12, caractérisé en ce que dans l'unité d'exploitation (6) il y a un compteur, le comptage des franges d'interférence, combiné avec leur écartement, fournissant la vitesse.

17. Dispositif selon la revendication 12, caractérisé en ce que l'unité d'exploitation (6) contient un processeur spécial de signaux numériques, qui est basé sur une transformation FFT (Fast Fourier Transformation) et exploite la répartition spectrale du signal de réception, la fréquence différentielle de la ligne de base de la répartition spectrale correspondant au plus petit commun multiple des fréquences de modulation ($\omega$1, $\omega$2) de la fréquence Doppler.

18. Dispositif selon la revendication 12, caractérisé en ce que pour dédoubler les rayons partiels à partir d'une source laser (1) on dispose sur une puce (2) optiquement intégrée une ramification en Y (21) ainsi qu'un modulateur de phase opto-électronique (22) pour la modulation de phase.

19. Dispositif selon la revendication 18, caractérisé en ce que la lumière d'une source laser (1) est subdivisée en au moins deux paires de rayons partiels pour réaliser plusieurs points de mesure (34), un rayon partiel présentant un modulateur de phase (22) dans chaque paire de rayons partiels qui est associée à un point de mesure (34).

**20.** Dispositif selon la revendication 18, caractérisé en ce que la puce optique intégrée IOC (2) présente un embranchement additionnel (23) à fréquence commandée pour produire des rayons partiels équivalents pour d'autres points de mesure (34) et en ce que l'on dispose un multiplexeur (9), fonctionnant de façon synchrone, pour la fréquence additionnelle de division des rayons ($f_1$), entre les récepteurs respectifs (4) et le filtre passe-bande (5).

**21.** Dispositif selon la revendication 19 ou 20, caractérisé en ce que l'on dispose de deux modulateurs de phase (22) sur une électrode commune.

FIG.1

EP 0 768 531 B1

FIG.3

FIG.2

FIG.4